# EUROPEAN PATENT APPLICATION

(11) **EP 1 909 402 A2**
(43) Date of publication of application: **09.04.2008**
(21) Application number: 07013676.7
(22) Date of filing: 12.07.2007
(51) Int. Cl.: H04B 1/18

(54) **Method and device for receiving digital multimedia broadcasting signal in wireless terminal**

(30) Priority: 04.10.2006 KR 20060097669
(71) Applicant: Samsung Electronics Co., Ltd., Suwon-si, Gyeonggi-Do (KR)
(72) Inventor: Kim, Jin-U, Suwon-si Gyeonggi-do (KR); Kim, Seung-Hwan, Suwon-si Gyeonggi-do (KR); Shin, Jong-Kyun, Suwon-si Gyeonggi-do (KR); Kim, Young-Hwan, Suwon-si Gyeonggi-do (KR); Kim, Yong-Jin, Suwon-si Gyeonggi-do (KR); Lee, Jae-Ho, Suwon-si Gyeonggi-do (KR); Chun, Jae-Bong, Suwon-si Gyeonggi-do (KR); Yoon, Seong-Ho, Suwon-si Gyeonggi-do (KR)
(74) Representative: Lang, Johannes

(57) **Abstract**

A method and device for receiving a digital multimedia broadcasting (DMB) signal in a wireless terminal where an external antenna is detachable from the wireless terminal, an internal antenna is embedded in the wireless terminal, a switch connects one of the external antenna and the internal antenna to a DMB receiver. The DMB receiver receives a DMB signal through one of the external antenna and the internal antenna. A controller controls the switch to connect the internal antenna and transmit the DMB signal to the DMB receiver when the external antenna is detached from the wireless terminal and controls the switch to connect the external antenna to the DMB receiver and transmit the DMB signal to the DMB receiver, when the external antenna is attached to the wireless terminal.

## Description

### BACKGROUND OF THE INVENTION

### Field of the Invention

The present invention relates generally to a device for receiving a Digital Multimedia Broadcasting (DMB) signal in a wireless terminal. More particularly, the present invention relates to a method and device for receiving a signal in a wireless terminal using external/internal antennas.

### Description of the Related Art

Generally, Digital Multimedia Broadcasting (DMB) provides audio, video, and data services that are at a level with a compact disk (CD), and has excellent rates of stationary and mobile reception. DMB is classified into terrestrial DMB and satellite DMB according to transmission means (for example, either ground wave or satellite). DMB refers to a digital multimedia broadcasting service for providing a high quality of various digital contents (for example, video, audio and data) to a stationary receiver in an economical broadcasting network.

In compliance with broadcasting law, only a terrestrial broadcasting service provider can provide the terrestrial DMB. The terrestrial DMB provides music and video services using ground relays. The satellite DMB provides a DMB service in a frequency band of 2.6 GHz to 2.655 GHz, which is an ultra high frequency (UHF), much greater than that of the terrestrial DMB. The terrestrial DMB transmits a radio wave using a transmitting station located near the capital area, and covers the capital area. The satellite DMB transmits a radio wave toward the Korean peninsula using a space satellite and thus, at once, makes it possible to provide a nationwide broadcast.

A wireless terminal receiving the terrestrial DMB needs an antenna having a length of at least 18 cm or more in order to increase a rate of receiving the terrestrial DMB. Alternatively, the wireless terminal needs a monopole antenna having a length of λ/4 to receive the terrestrial DMB. Thus, the wireless terminal needs a great amount space. The wireless terminal has a built-in retractable antenna, which is a multistage foldable antenna, to receive the terrestrial DMB. Thus, the wireless terminal increases in size as much. Therefore, the retractable antenna is not suitable for the wireless terminal that is presently slimming in size.

### SUMMARY OF THE INVENTION

Exemplary embodiments of the present invention address at least the above problems and/or disadvantages and provide at least the advantages described below. Accordingly, exemplary embodiments of the present invention provide a method and a device for receiving a DMB signal in a wireless terminal, using one of an external antenna detachable from the wireless terminal and/or an internal antenna embedded in the wireless terminal.

Aspect of exemplary embodiments of the present invention provide a method and device for receiving a DMB signal in a wireless terminal, using an external antenna attached to the wireless terminal when the wireless terminal is located in a weak electric-field area, or using an internal antenna embedded in the wireless terminal when the wireless terminal is located in a strong electric-field area.

Another aspect of exemplary embodiments of the present invention provides a method and device for receiving a DMB signal in a wireless terminal where an external antenna is detachable from the wireless terminal, an internal antenna is embedded in the wireless terminal, and a switch connects one of the external antenna and the internal antenna to a DMB receiver. The DMB receiver for receiving a DMB signal through one of the external antenna and the internal antenna connected by the switch. A controller controls the switch to connect the internal antenna to the DMB receiver and to transmit the DMB signal received through the internal antenna to the DMB receiver when the external antenna is detached from the wireless terminal, and controls the switch to connect the external antenna to the DMB receiver and to transmit the DMB signal received through the external antenna to the DMB receiver when the external antenna is attached to the wireless terminal.

Another aspect of exemplary embodiments of the present invention provides a device for receiving a broadcasting signal in a folder type wireless terminal where an external antenna is detachable from a body part of the wireless terminal, an internal antenna comprising a coating of a conductive material and provided as a ground on an inner surface of a folding part of the wireless terminal, and a switch connects one of the external antenna and the internal antenna to a broadcasting receiver. The broadcasting receiver receives a broadcasting signal through one of the external antenna and the internal antenna connected by the switch. A controller controls the switch to connect the internal antenna to the broadcasting receiver and to transmit the broadcasting signal received through the internal antenna to the broadcasting receiver when the external antenna is detached from the body part of the wireless terminal, and controls the switch to connect the external antenna to the broadcasting receiver and to transmit the broadcasting signal received through the external antenna to the broadcasting receiver when the external antenna is attached to the body part of the wireless terminal.

Another aspect of exemplary embodiments of the present invention is to provide a method and device for receiving a broadcasting signal in a slide type wireless terminal where an external antenna is detachable from a body part of the wireless terminal, an internal antenna is formed as an antenna pattern comprising conductive material on a Flexible Printed Circuits Board (FPCB) mounted on a body part of the wireless terminal, and a switch connects one of the external antenna and the internal antenna to a broadcasting receiver. The broadcasting receiver receives a broadcasting signal through one of the external antenna and the internal antenna connected by the switch. and a controller controls the switch to connect the internal antenna to the broadcasting receiver and to transmit the broadcasting signal received through the internal antenna to the broadcasting receiver when the external antenna is detached from the body part of the wireless terminal, and controls the switch to connect the external antenna to the broadcasting receiver and to transmit the broadcasting signal received through the external antenna to the broadcasting receiver when the external antenna is attached to the body part of the wireless terminal.

Other objects, advantages and salient features of the invention will become apparent to those skilled in the art from the following detailed description, which taken in conjunction with annexed drawings, disclose exemplary embodiments of the invention.

### BRIEF DESCRIPTION OF THE DRAWINGS

The above and other exemplary features and advantages of certain exemplary embodiments of the present invention will become more apparent from the following description of certain exemplary embodiments thereof when taken in conjunction with the accompanying drawings in which:
- FIG. 1: is a diagram illustrating a device for receiving a DMB signal using external/internal antennas in a folder type wireless terminal according to anexemplary embodiment of the present invention; and
- FIG. 2: is a diagram illustrating a device for receiving a DMB signal using external/internal antennas in a slide type wireless terminal according to an exemplary embodiment of the present invention.

### DETAILED DESCRIPTION OF EXEMPLARY EMBODIMENTS

The matters exemplified in this description are provided to assist in a comprehensive understanding of exemplary embodiments of the invention of the present disclosed with reference to the accompanying figures. Accordingly, those of ordinary skill in the art will recognize that various changes and modifications of the exemplary embodiments described herein can be made without departing from the scope and spirit of the claimed invention. Also, descriptions of well-known functions and constructions are omitted for clarity and conciseness.

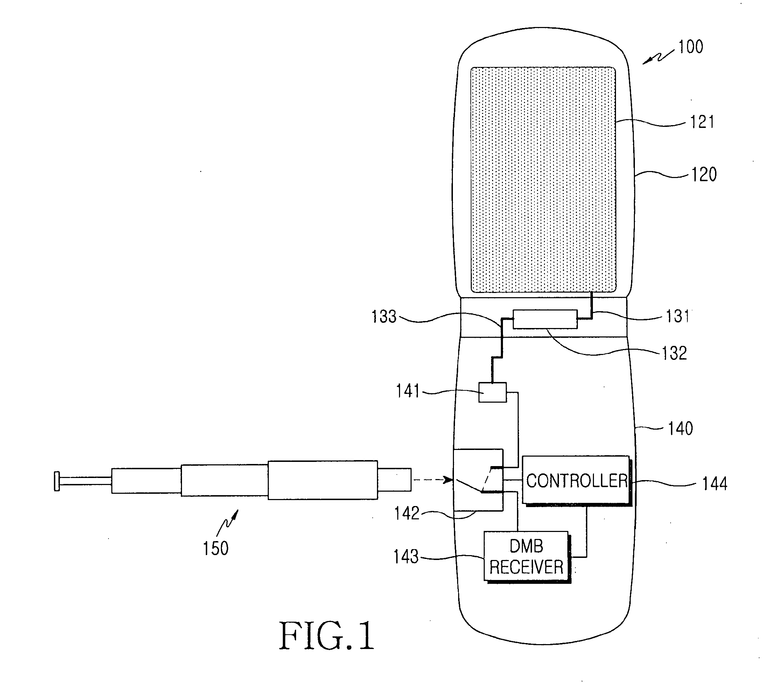

FIG. 1 is a diagram illustrating a device for receiving a DMB signal using external/internal antennas in a folder type wireless terminal according to an exemplary embodiment of the present invention.

Referring to FIG. 1, the folder type wireless terminal 100 includes an internal antenna 121, a hinge 132, a DMB signal terminal 141, an external antenna 150, a switch 142, a DMB receiver 143 and a controller 144. The internal antenna 121 is coated with a conductive material such as gold and silver and provided as a ground on an inner surface of a housing of a folding part 120 of the wireless terminal 100. The internal antenna 121 receives and transmits a DMB signal to the DMB receiver 143 when the external antenna 150 is detached from the wireless terminal 100.

The hinge 132 electrically connects the internal antenna 121 to the switch 142, and transmits the DMB signal received through the internal antenna 121 to the switch 142. The hinge 132 includes a first pin 131 and a second pin 133 formed of metal. The hinge 132 electrically connects with the internal antenna 121 through the first pin 131, and electrically connects with the switch 142 through the second pin 133. The hinge 132 receives the DMB signal through the internal antenna 121, and transmits the received DMB signal to the DMB receiver 143 through the DMB signal terminal 141 and the switch 142.

The external antenna 150 refers to an antenna detachable from a body part 140 of the wireless terminal. If the external antenna 150 is attached to the body part 140 of the wireless terminal, it receives and transmits the DMB signal to the DMB receiver 143 connected through the switch 142. The external antenna 150, which can be, for example, a multistage foldable antenna, will be described for illustrative purposes as a retractable antenna according to exemplary, non-limiting, embodiments the present invention.

The switch 142 connects one of the internal antenna 121 and the external antenna 150 to the DMB receiver 143. When the external antenna 150 is detached from the wireless terminal 100, the switch 142 connects the internal antenna 121 to the DMB receiver 143 and transmits the DMB signal received through the internal antenna 121 to the DMB receiver 143. The switch 142 substantially connects with the DMB signal terminal 141 connecting with the second pin 133 of the hinge 132. Thus, the switch 142 receives the DMB signal from the internal antenna 121 through the hinge 132 and the DMB signal terminal 141 and transmits the received DMB signal to the DMB receiver 143.

The DMB receiver 143 receives the DMB signal from one of the internal antenna 121 and the external antenna 150 that connect with each other through the switch 142. When the external antenna 150 is detached from the body part 140 of the wireless terminal, the controller 144 controls the switch 142 to connect the internal antenna 121 to the DMB receiver 143 and transmits the DMB signal received through the internal antenna 121 to the DMB receiver 143. When the external antenna 150 is attached to the body part 140 of the wireless terminal, the controller 144 controls the switch 142 to connect the external antenna 150 to the DMB receiver 143 and transmits the DMB signal received through the external antenna to the DMB receiver 143.

An operation of receiving the DMB signal in the folder type wireless terminal constructed as in FIG. 1 will be described. In a DMB reception mode for receiving a DMB in the wireless terminal, the controller 144 determines whether the external antenna 150 is attached to or detached from the body part 140 of the wireless terminal. When the external antenna 150 is detached from the body part 140 of the wireless terminal, the controller 144 senses the detachment and controls the switch 142 to connect the internal antenna 121 to the DMB receiver 143 and transmit the DMB signal received through the internal antenna 121 to the DMB receiver 143.

In the wireless terminal 100, reception performance of the DMB by the internal antenna 121 may deteriorate when the wireless terminal 100 enters and is located in a weak electric-field area in the course of receiving the DMB signal through the internal antenna 121 in a strong electric-field area.

In an exemplary implementation, when the external antenna 150 is attached to the body part 140 of the wireless terminal 100 to increase the DMB reception performance in the weak electric-field area, the controller 144 senses the attachment and controls the switch 142 to connect the external antenna 150 to the DMB receiver 143 and transmits the DMB signal received through the external antenna 150 to the DMB receiver 143. In an exemplary implementation, a multistage foldable external antenna can be attached to the body part 140 of the wireless terminal 100 and extended in length to improve reception performance of the DMB signal.

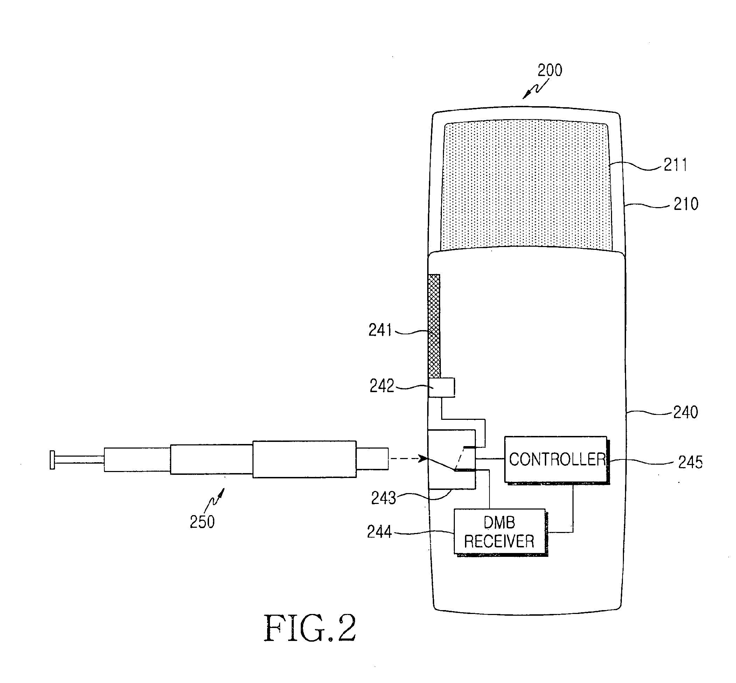

FIG. 2 is a diagram illustrating a device for receiving a DMB signal using external/internal antennas in a slide type wireless terminal according to another exemplary embodiment of the present invention. FIG 2 shows a rear view of a wireless terminal according to an exemplary implementation.

Referring to FIG. 2, the slide type wireless terminal 200 includes internal antennas 241 and 211, a DMB signal terminal 242, an external antenna 250, a switch 243, a DMB receiver 244, and a controller 245.

The internal antennas 241 and 211 receive and transmit the DMB signal to the DMB receiver 244 when the external antenna 250 is detached from the wireless terminal 200.

The internal antennas 241 and 211 are comprised of a first internal antenna 241 and a second internal antenna 211. The first internal antenna 241 can be an antenna pattern formed of conductive material on a Flexible Printed Circuits Board (FPCB) mounted on a body part 240 of the wireless terminal 200. The first internal antenna 241 can be a monopole type antenna, a meander line antenna, and a Planar Inverted F Antenna (PIFA). The second internal antenna 211 can be coated with a conductive material such as gold and silver and provided as a ground on an inner surface of a slide part 210 of the wireless terminal 200.

The first internal antenna 241 can serve as a radiator, and receives and transmits the DMB signal to the DMB receiver 244 when the external antenna 250 is detached from the wireless terminal 200. Alternately, the first and second internal antennas 241 and 221 can serve as a first radiator and a second radiator, respectively, and receive and transmit the DMB signals to the DMB receiver 244, when the external antenna 250 is detached from the wireless terminal 200.

The external antenna 250 refers to an antenna detachable from the body part 240 of the wireless terminal 200. The external antenna 250 receives and transmits the DMB signal to the DMB receiver 244 connected through the switch 243 when the external antenna 250 is attached to the body part 240 of the wireless terminal. The external antenna 250, which can be, for example, a multistage foldable antenna, will be described, for illustrative purposes as a retractable antenna according to exemplary, non-limiting, embodiments of the present invention.

The switch 243 connects at least any one of the internal antennas 241 and 211 and the external antenna 250 to the DMB receiver 244. The switch 243 connects the internal antennas 241 and 211 to the DMB receiver 244, and transmits the DMB signal received through the internal antennas 241 and 211 to the DMB receiver 244, when the external antenna 250 is detached from the wireless terminal 200. The switch 243 substantially connects with the DMB signal terminal 242 that connects with the first internal antenna 241. Thus, the switch 243 receives the DMB signal from the first internal antenna 241 through the DMB signal terminal 242 and transmits the received DMB signal to the DMB receiver 244. Alternately, the switch 243 receives the DMB signal from the first internal antenna 241 through the DMB signal terminal 242, and receives the DMB signal from the second internal antenna 211 through a connection line (not shown) connecting with the second internal antenna 211 and transmits the received DMB signals to the DMB receiver 244.

The DMB receiver 244can receive the DMB signal from at least one of the internal antennas 241 and 211 and the external antenna 250 that connect to each other through the switch 243.

The controller 245 controls the switch 243 to connect the first internal antenna 241 to the DMB receiver 244 and transmit the DMB signal received through the first internal antenna 241 to the DMB receiver 244, when the external antenna 250 is detached from the body part 240 of the wireless terminal.

Alternately, the controller 245 controls the switch 243 to connect the first and second internal antennas 241 and 211 to the DMB receiver 244, when the external antenna 250 is detached from the body part 240 of the wireless terminal. The controller 245 controls and transmits the DMB signal received through the first and/or second internal antennas 241 and 211 to the DMB receiver 244.

The controller 245 controls the switch 243 to connect the external antenna 250 to the DMB receiver 244 and transmit the DMB signal received through the external antenna 250 to the DMB receiver 244 when the external antenna 250 is attached to the body part 240 of the wireless terminal.

An exemplary operation of receiving the DMB signal in the slide type wireless terminal constructed as in FIG. 2 will be described. In a DMB reception mode for receiving a DMB in the wireless terminal, the controller 245 determines whether the external antenna 250 is attached to or detached from the body part 240 of the wireless terminal. When the external antenna 250 is detached from the body part 240 of the wireless terminal, the controller 245 senses the detachment and controls the switch 243 to connect the first internal antenna 241 to the DMB receiver 244 and transmit the DMB signal received through the first internal antenna 241 to the DMB receiver 244.

Alternately, when the external antenna 250 is detached from the body part 240 of the wireless terminal, the controller 245 senses the detachment and controls the switch 243 to connect the first and/or second internal antennas 241 and 211 to the DMB receiver 244 and transmit the DMB signals received through the first and/or second internal antennas 241 and 211 to the DMB receiver 244.

In a wireless terminal 200, reception performance of the DMB by the internal antennas 241 and 211 may deteriorate when the wireless terminal 200 enters and is located in a weak electric-field area in the course of receiving the DMB signal through the internal antennas 241 and 211 in a strong electric-field area.

When the external antenna 250 is attached to the body part 240 of the wireless terminal 200 to increase the DMB reception performance in the weak electric-field area, the controller 245 senses the attachment and controls the switch 243 to connect the external antenna 250 to the DMB receiver 244 and transmit the DMB signal received through the external antenna 250 to the DMB receiver 244. In an exemplary implementation, a multistage foldable external antenna can be attached to the body part 240 of the wireless terminal 200 and extended in length to improve reception performance of the DMB signal.

As described above, exemplary embodiments of the present invention can receive the DMB through the external/internal antennas of the wireless terminal, thereby improving reception performance by, for example, increasing the rate of receiving the terrestrial DMB including when the wireless terminal may not have sufficient space for housing a large, for example, in length, antenna.

Certain exemplary aspects of the present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains. The described hardware devices may be configured to act as one or more software modules in order to perform the operations of the above-described exemplary embodiments of the present invention.

While exemplary embodiments of the invention have been shown and described with reference to a certain embodiment thereof, it will be understood by those skilled in the art that various changes in form and details may be made therein without departing from the spirit and scope of the invention as described by the appended claims and their equivalents.

## Claims

1. A device for receiving a broadcasting signal, the device comprising:
an external antenna detachable from a wireless terminal;
an internal antenna embedded in the wireless terminal;
a switch for connecting one of the external antenna and the internal antenna to a broadcast receiver, the broadcast receiver receiving a broadcast signal through one of the external antenna and the internal antenna connected by the switch; and
a controller for controlling the switch to connect one of the external antenna and the internal antenna to the broadcast receiver based on whether the external antenna is attached to or detached from the wireless terminal.

2. The device of claim 1, wherein the wireless terminal comprises a folder type wireless terminal.

3. The device of claim 1, wherein the wireless terminal comprises a slide type wireless terminal.

4. The device of claim 3, further comprising an internal antenna on an inner surface of a slide part of the slide type wireless terminal.

5. The device of claim 2, further comprising a hinge for connecting the switch to the internal antenna.

6. The device of claim 1, wherein the external antenna is detachable from a body part of the wireless terminal.

7. The device of claim 1, wherein the external antenna comprises a retractable antenna.

8. A device for receiving a broadcasting signal, the device comprising:
an external antenna detachable from a folder type wireless terminal;
an internal antenna in the wireless terminal;
a switch for connecting one of the external antenna and the internal antenna to a broadcasting receiver, the broadcasting receiver receiving a broadcasting signal through one of the external antenna and the internal antenna connected by the switch; and
a controller for controlling the switch to connect one of the external antenna and the internal antenna to the broadcasting receiver based on whether the external antenna is attached to or detached from the wireless terminal.

9. The device of claim 8, further comprising a hinge for connecting the internal antenna to the switch.

10. The device of claim 8, wherein the external antenna comprises a retractable antenna.

11. A device for receiving a broadcasting signal, the device comprising:
an external antenna detachable from a slide type wireless terminal;
a first internal antenna in the wireless terminal;
a switch for connecting one of the external antenna and the internal antenna to a broadcasting receiver, the broadcasting receiver receiving a broadcasting signal through one of the external antenna and the internal antenna connected by the switch; and
a controller for controlling the switch to connect one of the external antenna and the internal antenna to the broadcasting receiver based on whether the external antenna is attached to or detached from the wireless terminal.

12. The device of claim 11, wherein the device further comprises a second internal antenna on an inner surface of a slide part of the slide type wireless terminal.

13. The device of claim 11, wherein the external antenna comprises a retractable antenna.

14. The device of claim 1, wherein the controller
controls the switch to connect the internal antenna to the broadcast receiver and transmit the broadcast signal received through the internal antenna, when the external antenna is detached from the wireless terminal.

15. The device of claims 1, wherein the controller
controls the switch to connect the external antenna to the broadcast receiver and to transmit the broadcast signal received through the external antenna to the broadcast receiver when the external antenna is attached to the wireless terminal.

16. A method for broadcasting signal, the method comprising:
selectively attaching an external antenna to a wireless terminal comprising an internal antenna;
connecting the internal antenna to a receiver and transmitting the broadcast signal received through the internal antenna to the broadcasting receiver when the external antenna is detached from the wireless terminal; and
connecting the external antenna to the broadcasting receiver and transmitting the broadcasting signal received through the external antenna to the broadcasting receiver when the external antenna is attached to the wireless terminal.

17. The device of claim 2, wherein
the internal antenna of the folder type wireless terminal comprises a coating of a conductive material
provided as a ground on an inner surface of a folding part of the wireless terminal.

18. The device of claim 3, wherein
the internal antenna of the slide type wireless terminal comprises an antenna pattern formed of conductive material on a Flexible Printed Circuits Board (FPCB) mounted on a body part of the wireless terminal.

19. The device of claim 4, wherein
the internal antenna comprises a coating of a conductive material and provided as a ground.

20. The device of claim 5, wherein the hinge comprises a first pin.connecting with the internal antenna, and a second pin connecting with the switch.

21. The device of claim 8, wherein the controller controls the switch to connect the internal antenna to the broadcasting receiver and transmit the broadcast signal received through the internal antenna to the broadcasting receiver, when the external antenna is detached from the wireless terminal.

22. The device of claims 8, wherein the controller controls the switch to connect the external antenna to the broadcasting receiver and to transmit the broadcasting signal received through the external antenna to the broadcasting receiver, when the external antenna is attached to the wireless terminal.

23. The device of claim 9, wherein the hinge comprises a first pin connecting with the internal antenna and a second pin connecting with the switch.

24. The device of claim 11, wherein the controller controls the switch to connect the internal antenna to the broadcasting receiver and transmit the broadcasting signal received through the internal antenna to the broadcasting receiver when the external antenna is detached from the wireless terminal.

25. The device of claims 11, wherein the controller controls the switch to connect the external antenna to the broadcasting receiver and to transmit the broadcasting signal received through the external antenna to the broadcasting receiver when the external antenna is attached to the wireless terminal.

26. The device of claim 12, wherein the internal antenna comprises a coating of a conductive material and provided as a ground.

27. A computer implemented method for receiving a broadcasting signal, the method comprising:
selectively attaching an external antenna to a wireless terminal comprising an internal antenna;
connecting the internal antenna to the broadcasting receiver and transmitting the broadcasting signal received through the internal antenna to the broadcasting receiver when the external antenna is detached from the wireless terminal; and
connecting the external antenna to the broadcasting receiver and transmitting the broadcasting signal received through the external antenna to the broadcasting receiver when the external antenna is attached to the wireless terminal.

28. A computer-readable medium storing a program for receiving a broadcasting signal, the program comprising:
a first set of instructions for selectively attaching an external antenna to a wireless terminal comprising an internal antenna;
a second set of instructions for connecting the internal antenna to the broadcasting receiver and transmitting the broadcasting signal received through the internal antenna to the broadcasting receiver when the external antenna is detached from the wireless terminal; and
a third set of instructions for connecting the external antenna to the broadcasting receiver and transmitting the broadcasting signal received through the external antenna to the broadcasting receiver when the external antenna is attached to the wireless terminal.

29. The device of claim 5, wherein the hinge comprises a coating of a conductive material and provided as a ground on an inner surface of a folding part of the wireless terminal.

30. The device of claim 8, wherein the internal antenna comprises a coating of a conductive material and provided as a ground on an inner surface of a folding part of the wireless terminal.

31. The device of claim 11, wherein the internal antenna comprises an antenna pattern formed of conductive material on a Flexible Printed Circuits Board (FPCB) mounted on a body part of the wireless terminal.

32. The device of claim 1, wherein the broadcasting signal is a Digital Multimedia Broadcasting (DMB) signal.

33. The device of claim 16, wherein the broadcasting signal is a Digital Multimedia Broadcasting (DMB) signal.

34. The method of claim 27, wherein the broadcasting signal is a Digital Multimedia Broadcasting (DMB) signal.

35. The program of claim 28, wherein the broadcasting signal is a Digital Multimedia Broadcasting (DMB) signal.
